# EUROPÄISCHE PATENTANMELDUNG

(11) **EP 3 166 189 A1**
(43) Veröffentlichungstag der Anmeldung: **10.05.2017**
(21) Anmeldenummer: 15192979.1
(22) Anmeldetag: 04.11.2015
(51) Int. Cl.: H02G 1/12

(54) **TRENN- UND ABISOLIEREINRICHTUNG FÜR EINE KABELVERARBEITUNGSMASCHINE**

(71) Anmelder: Schleuniger Holding AG, 3608 Thun (CH)
(72) Erfinder: Braun, Sebastian, 64807 Dieburg (DE); Schäfer, Benjamin, 35649 Bischoffen (DE)
(74) Vertreter: Patentbüro Paul Rosenich AG

(57) **Zusammenfassung**

Eine Trenn- und/oder Abisoliereinrichtung (7) für eine Kabelverarbeitungsmaschine weist mindestens zwei gegenläufig bewegbare Messerblöcke (16, 17) mit mindestens je einem Messer (18) auf. Ein zu trennendes und/oder abzuisolierendes Kabel kann zwischen den Messern (18) hindurchgeführt werden, die von zumindest einem Antrieb (20) für zumindest einen der Messerblöcke (16, 17) und einer Mechanik (13, 14, 15, 23) zur Führung zumindest des angetriebenen Messerblocks (16, 17) in Richtung auf das Kabel betätigt werden. Der Antrieb (20) wirkt zumindest mittelbar auf ein Element der Mechanik ein. Jeder angetriebene Messerblock (16, 17) sitzt auf einem Hebel (13, 14) entfernt von dessen Hebelachse (23) und führt eine Schwenkbewegung entlang eines Kreisbogens aus. Der Antrieb (20) greift dazu über ein drehbares Kraftübertragungselement (15) entfernt von der Hebelachse (23) und dem Messerblock (16, 17) am Hebel (13, 14) an.

## Beschreibung

Die Erfindung betrifft eine Trenn- und Abisoliereinrichtung für eine Kabelverarbeitungsmaschine gemäss dem Oberbegriff von Anspruch 1.

Typischerweise realisieren bekannte Schneid- und Abisoliereinheiten, wie beispielsweise in der DE102010004781A1 offenbart, die Schneid- und Abisolierbewegung durch eine Linearbewegung, die mittels eines Exzenters aus der Rotation eines Servo-Antriebs erzeugt wird. Dabei ist ein gemeinsamer Antrieb für zwei gegenläufig bewegbare Messerblöcke mit mindestens einem Abisoliermesserpaar und einem Trennmesserpaar vorgesehen. An einer Kurbelwelle des Antriebs ist ein erster Exzenter zum Heben und Senken des ersten Messerblocks und ebenfalls an der Kurbelwelle ist ein zweiter Exzenter zum gleichzeitigen Senken und Heben des zweiten Messerblocks angeordnet. Die Messerschlitten bewegen sich entlang mindestens einer Linearführungsschiene.

Die DE3601850A1 offenbart eine andere Variante einer Trenn- und Abisoliereinrichtung, deren gegenläufig bewegbare Messerblöcke auch linear für eine gegenläufige Bewegung auf das Kabel hin oder vom Kabel weg geführt sind. Diese Bewegung wird den Messerblöcken über einen Mechanismus aufgeprägt, der eine motorisch drehbare Nockenscheibe aufweist, deren Spur von einem Nockenfolger abgetastet wird. Dieser Nockenfolger wird entsprechend der Nockenspur linear verschoben und gibt diese Bewegung parallel seinem zugeordneten Messerblock mit.

In der Einrichtung gemäss der US5038457A wird die rotative Bewegung eines Antriebsmotors über eine Riemen-Gelenkhebel-Anordnung in eine lineare Bewegung der Messerblöcke übersetzt.

Eine weitere Variante zur Betätigung der Messerblöcke, wiederum jedoch entlang eines linearen Verstellweges radial zum zu bearbeitenden Kabel, offenbart die EP0715384A2. Hier wird die Drehbewegung des Antriebsmotors in eine Drehung einer parallel zum Verstellweg liegenden Spindel umgesetzt, welche Verstellmuttern trägt, die mit den Messerträgern gekoppelt sind. Bei Drehung der Spindeln verschieben sich die drehgesichert geführten Muttern entlang der Spindel und bewegen derart die Messerträger auf das Kabel hin und bei umgekehrter Drehrichtung der Spindel auch wieder vom Kabel weg.

Es war daher die Aufgabe der vorliegenden Erfindung eine Trenn- und Abisoliereinrichtung derart weiterzuentwickeln, dass sie einfacher als bisherige Konstruktionen aufgebaut ist und damit eine erhöhte Funktionssicherheit, wirtschaftliche Bauweise und bessere Ausnutzung der Antriebsleistung bietet.

Zur Lösung dieser Aufgabe sind die Merkmale des unabhängigen Anspruchs 1 vorgesehen. Weitere Merkmale und vorteilhafte Weiterbildungen sind in der Beschreibung, den Figuren und in den abhängigen Patentansprüchen dargelegt.

Der Ausgangspunkt ist dabei eine Einrichtung gemäss dem Oberbegriff des unabhängigen Anspruchs 1, bei welcher mindestens zwei gegenläufig bewegbare Messerblöcke mit mindestens je einem Messer vorhanden sind. Diese ist dazu ausgeführt, dass ein zu trennendes und/oder abzuisolierendes Kabel zwischen den Messern hindurchgeführt werden kann. Die Einrichtung weist zumindest einen Antrieb für zumindest einen der Messerblöcke und eine Mechanik zur Führung zumindest des angetriebenen Messerblocks in Richtung auf das Kabel auf, wobei der Antrieb zumindest mittelbar auf ein Element der Mechanik einwirkt.

Erfindungsgemäss ist eine derartige Einrichtung dadurch gekennzeichnet, dass jeder angetriebene Messerblock auf einem Hebel entfernt von dessen Hebelachse sitzt und im Zuge der Bewegung eine Schwenkbewegung entlang eines Kreisbogens ausführt, und ein Antrieb über ein drehbares Kraftübertragungselement entfernt von der Hebelachse und dem Messerblock am Hebel angreift.

Insgesamt hat diese Konstruktion den Vorteil, dass sie keine Wandlung der Rotationsbewegung des Antriebs in eine Linearbewegung mehr erfordert, dass die benötigte Spielfreiheit leichter zu erreichen ist und die Schneidbewegung mit geringerem Trägheitsmoment realisiert werden kann. Somit kann die notwendige Antriebsenergie reduziert werden, was neben der grundsätzlich kostengünstiger ausführbaren Rotationsbewegung zusätzlich Kosten beim Antriebsmotor spart.

Bevorzugt ist diese Einrichtung weiters gekennzeichnet dadurch, dass beide einander gegenüberliegenden und gegenläufig bewegbaren Messerblöcke auf je einem Hebel sitzen, und diese einander gegenüberliegenden und gegenläufig bewegbaren Hebel um eine gemeinsame Hebelachse schwenkbar sind. Damit können für einen gegebenen Ausgangsabstand die Messer schneller geschlossen werden, wodurch die Einrichtung unter Beibehaltung der genannten Vorteile zusätzlich noch kürzere Taktzeiten bietet.

In einfacher Weise kann dies dadurch bewirkt werden, dass ein drehbares Kraftübertragungselement eines Antriebs gleichzeitig an beiden einander gegenüberliegenden und gegenläufig bewegbaren Hebeln angreift. Kraftvergeudende und spielbehaftete Mechanismen zur Verteilung der Antriebseinwirkung auf beide Messerblöcke können dadurch vermieden werden.

Eine kompakte Bauweise wird ermöglicht durch eine erfindungsgemässe Ausführungsform, bei welcher der Angriffspunkt des Kraftübertragungselementes an den Hebeln in einer Ebene liegt, die zwischen der Hebelachse und den Messerblöcken und vorzugsweise im Wesentlichen parallel zur Hebelachse sowie der Verbindungslinie der Messerblöcke in deren geöffneter Stellung liegt.

Die kompakte Bauweise der erfindungsgemässen Einrichtung insbesondere im Bereich der Hebelachse und des Kraftübertragungselementes wird noch weiter verbessert, wenn zumindest einer der einander gegenüberliegenden und gegenläufig bewegbaren Hebel ausgehend von der Hebelachse einen in Richtung auf die Messerblöcke hin umgebogenen Hebelabschnitt aufweist, und das Kraftübertragungselement an diesem Hebelabschnitt angreift.

Ebenfalls trägt zur Vergrösserung dieses Vorteils das optionale Erfindungsmerkmal bei, dass das Kraftübertragungselement an einem Hebel an einer Stelle zwischen der Hebelachse und dem Messerblock angreift und der Hebelabschnitt dieser Stelle in Bezug auf das Kraftübertragungselement gegenüberliegt.

Wenn dabei jeder Hebel mit einer Rolle versehen ist, an welcher das Kraftübertragungselement für die Krafteinleitung in den Hebel anliegt, ist durch die Reibungsverminderung sowohl eine bessere Ausnutzung der Antriebskraft als auch eine Schonung der Bauteile gewährleistet.

Bevorzugt ist das Kraftübertragungselement als Kurven- bzw. Nockenscheibe ausgeführt.

Gemäss einer bevorzugten Ausführungsform der Erfindung weist dabei die Kurven- bzw. Nockenscheibe Umfangsabschnitte mit starker Steigung und daran anschliessende Umfangsabschnitte mit geringerer Steigung auf. Damit kann eine unterschiedlich schnelle Bewegung der Messerblöcke bei gleichförmiger und damit einfach steuerbarer Antriebsbetätigung erreicht werden. Vorzugsweise werden die Umfangsabschnitte mit starker Steigung zu Beginn der Betätigungsbewegung der Messerblöcke aufeinander zu und die Umfangsabschnitte mit geringerer Steigung kurz vor und während des Kontaktes der Messer mit dem Kabel durchlaufen, um rasch eine Annäherung der Messer an das Kabel zu bewirken, anschliessend aber eine feiner dosierbare Bewegung im kritischen Bereich des Schneidens des Kabels bzw. insbesondere der Isolierung zu ermöglichen.

Spielfreiheit und automatische Rückstellung in die Ausgangslage mit geöffneten Messerblöcken kann einfach und ohne notwendige Antriebsleistung dadurch erzielt werden, dass zumindest einer der Hebel mittels eines Federelementes mit einer Kraft in Richtung auf eine Stellung mit vom Kabel entferntem Messerblock beaufschlagt ist.

Bevorzugt ist zumindest einer der Hebel mit einer Gleitführung für den gegenüberliegenden Hebel versehen.

Eine wesentliche Vereinfachung der Konstruktion und Verringerung des baulichen Aufwandes kann erfindungsgemäss erzielt werden, wenn zwei einander gegenüberliegende und gegenläufig bewegbare Hebel mit je einem Trennmesser und je einem Abisoliermesser versehen sind. Damit ist sowohl der Trennvorgang als auch das Abisolieren sequentiell mit einem Hebelpaar mit nur einem Antrieb durchführbar.

Als bevorzugte Ausführungsform für den Antrieb ist ein programmierbarer Elektromotor vorgesehen, vorzugsweise ein Servomotor oder ein Schrittmotor.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung beschrieben sind. Dabei können die in den Ansprüchen und in der Beschreibung erwähnten Merkmale jeweils einzeln für sich oder in beliebiger Kombination erfindungswesentlich sein.

Die Bezugszeichenliste ist wie auch der technische Inhalt der Patentansprüche und Figuren Bestandteil der Offenbarung. Die Figuren werden zusammenhängend und übergreifend beschrieben. Gleiche Bezugszeichen bedeuten gleiche Bauteile, Bezugszeichen mit unterschiedlichen Indices geben funktionsgleiche oder ähnliche Bauteile an.

Es zeigen dabei:
Fig. 1 beispielhaft eine Ansicht eines Ausführungsbeispiels einer erfindungsgemässen Schneid- und Abisoliereinheit in Richtung der Kabelachse,
Fig. 2 eine Ansicht der aktiven Elemente der Einrichtung der Fig. 1, ebenfalls in Richtung der Kabelachse gesehen,
Fig. 3 eine Ansicht entsprechend der Fig. 2, jedoch ohne Unterbau,
Fig. 4 eine Ansicht entsprechend der Fig. 3 mit komplett geschlossenen Messern, und

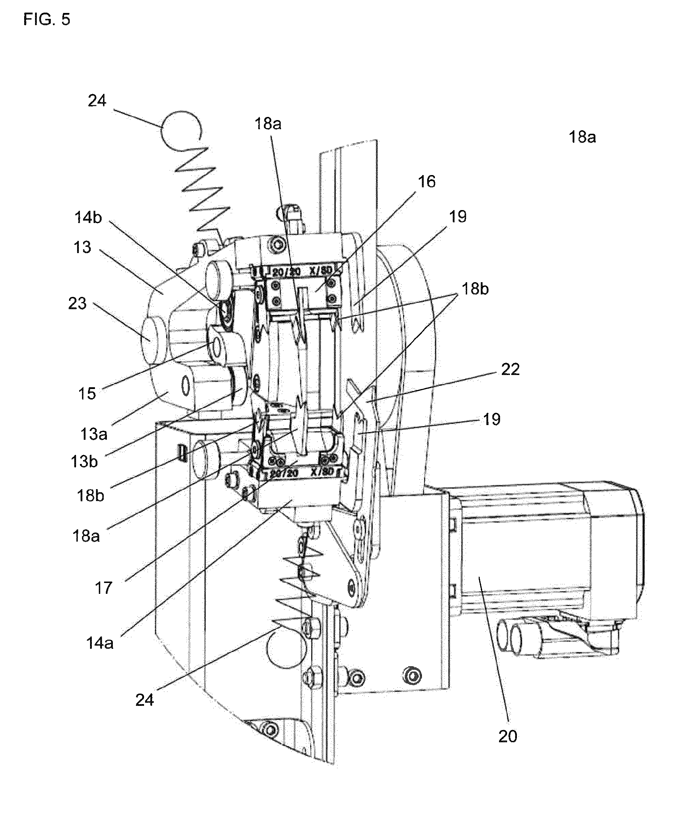

Fig. 5 eine perspektivische Ansicht entsprechend der Fig. 3 aus fast seitlicher Richtung zur Kabelachse.

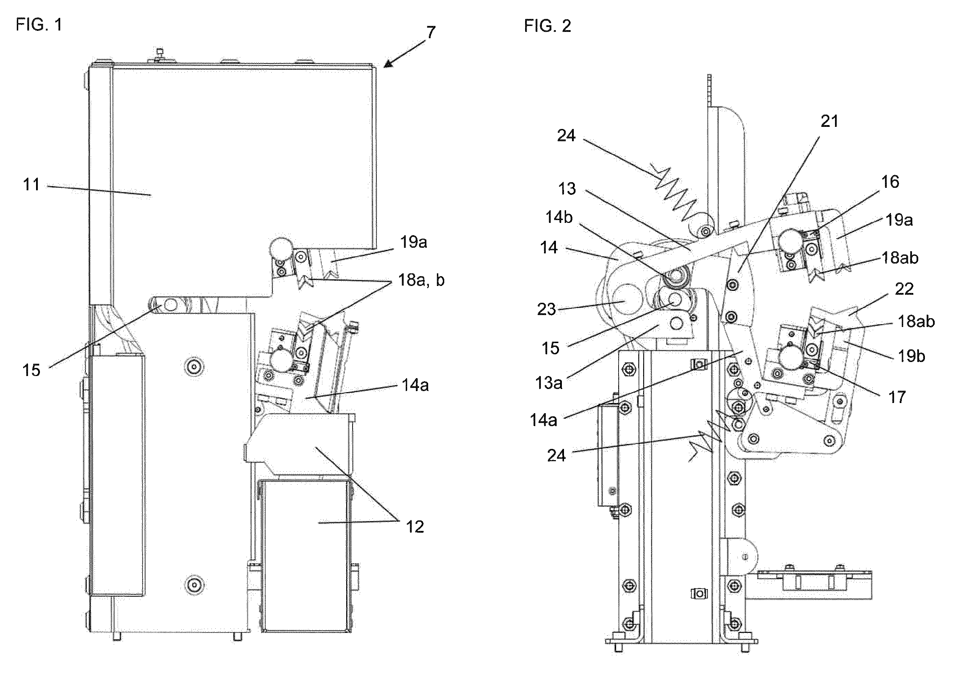

Figur 1 zeigt die gesamte Schneid- und Abisoliereinheit 7 inklusive deren Verkleidung 11, sowie die Abfallbehälter 12 zur Aufnahme von Isolations- und abgetrennten Leitungsresten.

In Figur 2 ist- nach Entfernung der Verkleidung 11 - die erfindungsgemässe Scherenkinematik dargestellt. Bei der erfindungsgemäßen Schneid- und Abisoliereinheit 7 wird auf ein neues Antriebs- und Kinematikkonzept gesetzt, bei dem die Schneid- und Abisolierbewegung statt der bislang üblichen Linearbewegung erfindungsgemäss Teil einer Schwenkbewegung der Messerblöcke 16, 17 ist. Die Bewegung erinnert an einen Scherenschnitt, wobei der "Schneidenbereich" nur am äussersten Bereich der oberen Scherenhälfte 13 und der unteren Scherenhälfte 14 vorhanden ist, indem der angetriebene obere Messerblock 16 bzw. der im dargestellten Beispiel ebenfalls angetriebene untere Messerblock 17 montiert sind.

Die Schneid- und Abisoliereinheit 7 verfügt über einen in typischer räumlicher Anordnung mit im Wesentlichen horizontaler Kabelführung oberen Hebel 13 und einen unteren Hebel 14, die auf einer gemeinsamen Schwenkachse 23 gelagert sind. An deren Spitze, entfernt von der Schwenkachse 23, sitzen die Messerblöcke 16 bzw. 17, die mittig je ein Trennmesser 18a, jeweils beidseitig vom Trennmesser 18a die Abisoliermesser 18b halten. Zusätzlich sind an den Messerblock-Halterungen jeweils Schlechtteilmesser 19a (oben) und 19b (unten) befestigt. Diese Elemente führen für den Trenn- bzw. Abisolierprozess eine Schwenkbewegung entlang eines Kreisbogens um die Hebelachse 23 aus.

Die Trennmesser 18a und die beiden Abisoliermesserpaare 18b sind mit unterschiedlichen Längen, aber paarweise nebeneinander beabstandet angeordnet. Damit ist sichergestellt, dass in einfacher Weise die mittig angeordneten, gegenüber den Abisoliermessern 18b vorstehenden Trennmesser 18a eine quer zum Messerpaar angeordnete Leitung trennen können. Danach werden die nun getrennten Leitungsenden axial vom Trennmesser 18a zurückgezogen und jeweils zum Abisolieren zwischen den beiden Abisoliermesserpaaren 18b positioniert. Die Abisoliermesser 18b werden von derselben Mechanik 13, 14, 15 bewegt wie die Trennmesser 18a, bis die gewünschte Einschnitttiefe in der Isolation erreicht ist. Anschliessend werden die Leitungsenden über herkömmliche, bekannte Leitungsfördereinrichtungen axial zurückgezogen und die Isolationshülsen werden von den Abisoliermessern 18b vom Metallleiter der Leitungsenden in den Behälter 12 abgestreift. Damit kann ein grösserer Aufwand für eine Trennung der Antriebe von Trennmessern 18a und Abisoliermessern 18b vermieden werden, da ohnedies die zu bearbeitende Leitungsachse dieselbe ist und die Prozesse nacheinander durchgeführt werden müssen.

Die Schließbewegung der Hebel 13, 14 der Schneid- und Abisoliereinheit 7 wird durch eine Kurvenscheibe 15 als Kraftübertragungselement bewirkt. Diese mit einem Antrieb 20 beispielsweise über einen Zahnriemen, ein Zahnradgetriebe od. dgl. antriebsmässig verbundene Scheibe 15 transformiert die Rotationsbewegung eines Servo-Motors 20 in die Schwenkbewegung der Scherenhälften 13 und 14. Der Servo-Motor 20 bzw. jeder gleichermassen einsetzbare programmierbare Elektromotor, beispielsweise auch ein Schrittmotor, sorgt in jedem Fall für die Schließbewegung der Messer 18a, 18b, 19. Der programmierte Drehwinkel der Kurvenscheibe 15 wird mittels des Servo-Motors 20 exakt angefahren, so dass z.B. die Abisoliermesser 18b ein exaktes Abstandsmaß zueinander einnehmen können, das für das ordnungsgemässe Abisolieren ohne Beschädigung des innenliegenden Leiters des Kabels erforderlich ist. Die auf Zug beanspruchten Federelemente 24 sorgen für einen permanenten Kontakt der Hebel 13 und 14 zur Kurvenscheibe 15, so dass die Abisoliermesser nicht unbeabsichtigt oder unkontrolliert zu weit schließen können. Im Anschluss an den Abisolierprozess wird die Drehrichtung des Servo-Motors 20 umgekehrt und die Scherenhälften 13 und 14 öffnen wieder, welche Öffnungsbewegung über die Federvorspannung der Federelemente 24 bewirkt wird. Dies bietet auch den Vorteil, dass kein Umkehrspiel zwischen der Öffnungs- und Schließbewegung entstehen kann. Bevorzugt ist ein Antrieb 20 und ein damit verbundenes Kraftübertragungselement 15 vorgesehen, das gleichzeitig an beiden einander gegenüberliegenden Hebeln 13, 14 angreift. Die Öffnungsbewegung, sowie auch die Schliessbewegung der Hebel 13, 14 könnte auch durch eine Zwangssteuerung durch Zusammenwirken eines Zwangsführungssystems zwischen Hebel 13, 14 und Kraftübertragungselement 15 bewirkt werden, indem beispielsweise Zapfen am Kraftübertragungselement 15 in Führungskulissen an den Hebeln 13, 14 geführt werden.

Ein Hebel 13 der Scherenhälften 13, 14 erstreckt sich im Wesentlichen gerade vom Bereich der Hebelachse 23 über den Bereich des Zusammenwirkens mit der Kurvenscheibe 15 bis hin zum äussersten Hebelende mit dem Messerblock 16. Bevorzugt ist dieser Hebel derart ausgeführt, dass ausgehend von der Hebelachse 23 ein in Richtung auf die Messerblöcke 16, 17 hin umgebogener Hebelabschnitt 13a vorgesehen ist. Das Kraftübertragungselement 15 greift dann bevorzugt an diesem Hebelabschnitt 13a an. Der Hebel 14 hingegen ist vorzugsweise ausgehend von einem im Wesentlichen ebenfalls geraden Abschnitt zwischen Hebelachse 23 und Bereich des Zusammenwirkens mit der Kurvenscheibe 15 vom gegenüberliegenden Hebel 13 weg abgebogen oder abgeknickt, um an seinem wieder im Wesentlichen in die ursprüngliche Richtung zurückgebogenen Ende Platz für die Aufnahme des unteren Messerträgers 17 zu schaffen.

Andere Bauformen der Hebel 13, 14 sind denkbar, solange die erreichbare Positioniergenauigkeit bezüglich der Abisolier-Einschneidetiefe / -qualität und die verfügbare Einschneidekraft der Trennmesser 18a bzw. der Abisoliermesser 18b gewährleistet ist. Außerdem ist ein ausreichendes Öffnungsmaß zwischen den Messerpaaren 18a, 18b erforderlich, so daß Leitungen zwischen den geöffneten Messern durch gefördert werden können.

Das Kraftübertragungselement 15 greift an einem Hebel 14 an einer Stelle zwischen der Hebelachse 23 und dem Messerblock 17 an, wobei der ebenfalls von der Hebelachse 23 weg weisende Hebelabschnitt 13a dieser Stelle in Bezug auf das Kraftübertragungselement 15 gegenüberliegt.

Zur Führung der Scherenhälften 13 und 14 zueinander ist eine Gleitführung 21 zwischen den Hebeln 13 und 14 eingebaut. Diese verhindert, dass Probleme durch Schwingungen oder Verschiebungen in Leitungsrichtung zwischen den Hebeln 13 und 14 entstehen können. Vorzugsweise, jedoch aus technischer Hinsicht nicht notwendigerweise ist ein Leitungsheber 22 (siehe Fig. 6) vorgesehen, der ebenfalls eine Schwenkbewegung ausführt.

Um Reibung zu verhindern ist jeder Hebel 13, 14 vorzugweise mit einer um eine parallel zur Hebelachse 23 bzw. zu der dazu parallelen Drehachse der Kurvenscheibe 15 drehbaren Rolle 13a, 14a versehen. An diesen Rollen 13a, 14a liegt die Kurvenscheibe 15 beaufschlagt durch die Federelemente 24 an und bringt die für die Verschwenkung der Hebel 13, 14 benötigte Kraft über diese Rollen 13a, 14a auf die Hebel 13, 14 auf. Natürlich sind andere reibungsvermindernde Konstruktionen möglich, beispielsweise Einsätze aus reibungsverminderndem Material in den Hebeln 13, 14.

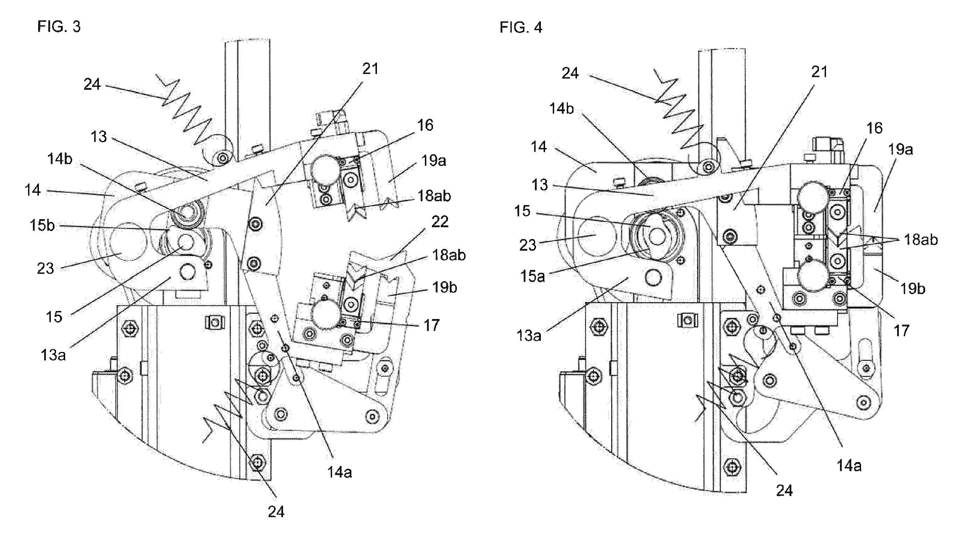

Die Figuren 3 und 4 zeigen die Endpositionen des Ablaufs der Schließbewegung der Schneid- und Abisoliereinheit 7. Angetrieben werden die Hebel 13 und 14 durch die Rotation der Kurvenscheibe 15. Diese verfügt im ersten umfangsmässigen Abschnitt der Drehbewegung nach Aktivierung des Antriebs einen Umfangsbereich 15a mit starker Steigung, an welchem sich ein Umfangsabschnitt 15b mit geringer Steigung anschliesst. Dies ermöglicht es im Bereich großer Scherenöffnung (Fig. 3) auf Kosten der Genauigkeit schneller und im Bereich kleiner Scherenöffnung (Fig. 4) - in der es auf Genauigkeit ankommt -langsamer und genauer zu sein.

Insgesamt hat diese Konstruktion den Vorteil, dass sie keine Wandlung der Rotationsbewegung eines Antriebs 20 in eine Linearbewegung mehr erfordert, dass die benötigte Spielfreiheit im Antriebsweg der Messerblöcke 16, 17 leichter zu erreichen ist und die Schneidbewegung mit geringerem Trägheitsmoment realisiert werden kann. Somit kann die notwendige Antriebsenergie reduziert werden, was neben der grundsätzlich kostengünstiger ausführbaren Rotationsbewegung zusätzlich Kosten beim Antriebsmotor 20 spart.

### Liste der Bezugszeichen

- 7: Schneid- und Abisoliereinheit
- 11: Verkleidung
- 12: Abfallbehälter
- 13: Oberer Hebel
- 13a: Hebelabschnitt
- 13b: Rolle
- 14: Unterer Hebel
- 14a: Abgebogener Hebelabschnitt
- 14b: Rolle
- 15: Kurvenscheibe
- 15a: Umfangsabschnitt mit starker Steigung
- 15b: Umfangsabschnitt mit geringer Steigung
- 16: Oberer Messerblock
- 17: Unterer Messerblock
- 18a: Trennmesser
- 18b: Abisoliermesser
- 19a,b: Oberes bzw. unteres Schlechtteilmesser
- 20: Servo-Motor
- 21: Gleitführung
- 22: Leitungsheber
- 23: Drehachse
- 24: Federelement

## Patentansprüche

1. Trenn- und/oder Abisoliereinrichtung (7) für eine Kabelverarbeitungsmaschine, mindestens aufweisend zwei gegenläufig bewegbare Messerblöcke (16, 17) mit mindestens je einem Messer (18), wobei ein zu trennendes und/oder abzuisolierendes Kabel zwischen den Messern (18) hindurchgeführt werden kann, sowie zumindest einem Antrieb (20) für zumindest einen der Messerblöcke (16, 17) und einer Mechanik (13, 14, 15, 23) zur Führung zumindest des angetriebenen Messerblocks (16, 17) in Richtung auf das Kabel, wobei der Antrieb (20) zumindest mittelbar auf ein Element der Mechanik einwirkt, **dadurch gekennzeichnet, dass** jeder angetriebene Messerblock (16, 17) auf einem Hebel (13, 14) entfernt von dessen Hebelachse (23) sitzt und im Zuge der Bewegung eine Schwenkbewegung entlang eines Kreisbogens ausführt, und ein Antrieb (20) über ein drehbares Kraftübertragungselement (15) entfernt von der Hebelachse (23) und dem Messerblock (16, 17) am Hebel (13, 14) angreift.

2. Einrichtung nach Anspruch 1, **dadurch gekennzeichnet, dass** beide einander gegenüberliegenden und gegenläufig bewegbaren Messerblöcke (16, 17) auf je einem Hebel (13, 14) sitzen, und diese einander gegenüberliegenden und gegenläufig bewegbaren Hebel (13, 14) um eine gemeinsame Hebelache (23) schwenkbar sind.

3. Einrichtung nach Anspruch 2, **dadurch gekennzeichnet, dass** ein drehbares Kraftübertragungselement (15) eines Antriebs (20) gleichzeitig an beiden einander gegenüberliegenden und gegenläufig bewegbaren Hebeln (13, 14) angreift.

4. Einrichtung nach Anspruch 3, **dadurch gekennzeichnet, dass** der Angriffspunkt des Kraftübertragungselementes (15) an den Hebeln (13, 14) in einer Ebene liegt, die zwischen der Hebelachse (23) und den Messerblöcken (16, 17) und vorzugsweise im Wesentlichen parallel zur Hebelachse (23) sowie der Verbindungslinie der Messerblöcke (16, 17) in deren geöffneter Stellung liegt.

5. Einrichtung nach Anspruch 4, **dadurch gekennzeichnet, dass** zumindest einer (13) der einander gegenüberliegenden und gegenläufig bewegbaren Hebel (13, 14) ausgehend von der Hebelachse (23) einen in Richtung auf die Messerblöcke (16, 17) hin umgebogenen Hebelabschnitt (13a) aufweist, und das Kraftübertragungselement (15) an diesem Hebelabschnitt (13a) angreift.

6. Einrichtung nach Anspruch 5, **dadurch gekennzeichnet, dass** das Kraftübertragungselement (15) an einem Hebel (14) an einer Stelle zwischen der Hebelachse (23) und dem Messerblock (17) angreift und der Hebelabschnitt (13a) dieser Stelle in Bezug auf das Kraftübertragungselement (15) gegenüberliegt.

7. Einrichtung nach einem der Ansprüche 1 bis 6, **dadurch gekennzeichnet, dass** jeder Hebel (13, 14) mit einer Rolle (13b, 14b) versehen ist, an welcher das Kraftübertragungselement für die Krafteinleitung in den Hebel (13, 14) anliegt.

8. Einrichtung nach einem der Ansprüche 1 bis 7, **dadurch gekennzeichnet, dass** das Kraftübertragungselement (15) als Kurven- bzw. Nockenscheibe ausgeführt ist.

9. Einrichtung nach Anspruch 8, **dadurch gekennzeichnet, dass** die Kurven- bzw. Nockenscheibe (15) Umfangsabschnitte mit starker Steigung und daran anschliessende Umfangsabschnitte mit geringerer Steigung aufweist, wobei vorzugsweise die Umfangsabschnitte mit starker Steigung zu Beginn der Betätigungsbewegung der Messerblöcke (16, 17) aufeinander zu und die Umfangsabschnitte mit geringerer Steigung kurz vor und während des Kontaktes der Messer (18) mit dem Kabel durchlaufen werden.

10. Einrichtung nach einem der Ansprüche 1 bis 9, **dadurch gekennzeichnet, dass** zumindest einer der Hebel (13, 14) mittels eines Federelementes (24) mit einer Kraft in Richtung auf eine Stellung mit vom Kabel entferntem Messerblock (16, 17) beaufschlagt ist.

11. Einrichtung nach einem der Ansprüche 1 bis 10, **dadurch gekennzeichnet, dass** zumindest einer der Hebel (13, 14) mit einer Gleitführung (21) für den gegenüberliegenden Hebel versehen ist.

12. Einrichtung nach einem der Ansprüche 1 bis 11, **dadurch gekennzeichnet, dass** zwei einander gegenüberliegende und gegenläufig bewegbare Hebel (13, 14) mit je einem Trennmesser (18a) und je einem Abisoliermesser (18b) versehen sind.

13. Einrichtung nach einem der Ansprüche 1 bis 12, **dadurch gekennzeichnet, dass** der Antrieb (20) ein programmierbarer Elektromotor ist, vorzugsweise ein Servomotor oder ein Schrittmotor.
